# EUROPÄISCHE PATENTANMELDUNG

(11) **EP 2 226 886 A1**
(43) Veröffentlichungstag der Anmeldung: **08.09.2010**
(21) Anmeldenummer: 09012980.0
(22) Anmeldetag: 14.10.2009
(51) Int. Cl.: H01M 10/50, H01M 2/20, H01M 2/26

(54) **Batterie mit Ableiteinrichtung**

(30) Priorität: 23.02.2009 DE 102009010145
(71) Anmelder: Li-Tec Battery GmbH, 01917 Kamenz (DE)
(72) Erfinder: Schäfer, Tim, 99762 Niedersachswerfen (DE); Gutsch, Andreas, Dr., 59348 Lüdinghausen (DE)
(74) Vertreter: Schlotter, Alexander Carolus Paul

(57) **Zusammenfassung**

Eine erfindungsgemäße elektrochemische Energiespeichervorrichtung weist wenigstens eine galvanische Zelle auf. Weiter weist die elektrochemische Energiespeichervorrichtung wenigstens eine Ableiteinrichtung, welche der wenigstens einen galvanischen Zelle zugeordnet ist, und wenigstens eine Anschlusseinrichtung auf, welche der wenigstens einen Ableiteinrichtung zugeordnet ist. Die elektrochemische Energiespeichervorrichtung ist dadurch gekennzeichnet, dass der wenigstens einen Anschlusseinrichtung wenigstens eine Wärmetauscheinrichtung zugeordnet ist, wobei die wenigstens eine Wärmetauscheinrichtung ausgestaltet ist, mit der wenigstens einen Anschlusseinrichtung Wärmeenergie auszutauschen.

## Beschreibung

Die vorliegende Erfindung betrifft eine Batterie mit wenigstens einer Ableiteinrichtung. Die Erfindung wird im Zusammenhang mit wiederaufladbaren Lithium-Ionen-Batterien zur Versorgung von Kraftfahrzeugantrieben beschrieben. Es wird darauf hingewiesen, dass die Erfindung auch unabhängig von der Bauart der Batterie bzw. deren galvanischen Zellen, deren Chemie und auch unabhängig von der Art des versorgten Antriebs Verwendung finden kann.

Aus dem Stand der Technik sind wiederaufladbare Batterien mit mehreren galvanischen Zellen zur Versorgung von Kraftfahrzeugantrieben bekannt. Während des Betriebs einer derartigen Batterie altern deren galvanische Zellen, so dass sich die Ladekapazität der galvanischen Zellen bzw. der Batterie zunehmend verringert.

Der Erfindung liegt daher die Aufgabe zugrunde, die Ladekapazität der galvanischen Zellen einer Batterie während einer höheren Zahl von Ladezyklen zu erhalten.

Diese Aufgabe wird erfindungsgemäß durch die Gegenstände der unabhängigen Ansprüche erreicht. Zu bevorzugende Weiterbildungen der Erfindung sind Gegenstand der Unteransprüche.

Eine erfindungsgemäße elektrochemische Energiespeichervorrichtung weist wenigstens eine galvanische Zelle auf. Weiter weist die elektrochemische Energiespeichervorrichtung wenigstens eine Ableiteinrichtung, welche der wenigstens einen galvanischen Zelle zugeordnet ist, und wenigstens eine Anschlusseinrichtung auf, welche der wenigstens einen Ableiteinrichtung zugeordnet ist. Die elektrochemische Energiespeichervorrichtung ist **dadurch gekennzeichnet, dass** der wenigstens einen Anschlusseinrichtung wenigstens eine Wärmetauscheinrichtung zugeordnet ist. Die wenigstens eine Wärmetauscheinrichtung ist ausgestaltet, mit der wenigstens einen Anschlusseinrichtung Wärmeenergie auszutauschen.

Im Sinne der Erfindung ist unter einer elektrochemischen Energiespeichervorrichtung eine Vorrichtung zu verstehen, welche auch wenigstens eine galvanische Zelle umfasst. Auch umfasst die Vorrichtung weitere Einrichtungen, welche dem Betrieb der wenigstens einen galvanischen Zelle dienen. Dabei können die wenigstens eine galvanische Zelle und die ergänzenden Einrichtungen in einem gemeinsamen Gehäuse angeordnet sein. Auch ab einer gewissen Zahl galvanischer Zellen kann die elektrochemische Energiespeichereinrichtung aus mehreren Einheiten bestehen.

Im Sinne der Erfindung ist unter einer galvanischen Zelle eine Einrichtung zu verstehen, welche auch zur Abgabe elektrischer Energie und zur Wandlung von chemischer Energie in elektrische Energie dient. Dazu weist die galvanische Zelle wenigstens zwei Elektroden unterschiedlicher Polarität und den Elektrolyt auf. Je nach Bauart ist die galvanische Zelle auch in der Lage, beim Laden elektrische Energie aufzunehmen, in chemische Energie zu wandeln und abzuspeichern. Die Wandlung von elektrischer in chemische Energie ist verlustbehaftet und von unumkehrbaren chemischen Reaktionen begleitet. Ein elektrischer Strom in eine galvanische Zelle oder aus dieser heraus kann eine elektrische Heizleistung bewirken. Diese elektrische Heizleistung kann zur Temperaturerhöhung der galvanischen Zelle führen. Mit steigender Temperatur nehmen unumkehrbare chemische Reaktionen zu. Diese unumkehrbaren chemischen Reaktionen können bewirken, dass Bereiche einer galvanischen Zelle für die Wandlung und/oder Speicherung von Energie nicht mehr zur Verfügung stehen. Mit einer zunehmenden Zahl von Ladevorgängen gewinnen diese Bereiche an Umfang. Damit sinkt die nutzbare Ladekapazität einer galvanischen Zelle bzw. der Vorrichtung.

Im Sinne der Erfindung ist unter einer Ableiteinrichtung eine Einrichtung zu verstehen, welche beim Entladen Elektronen aus einer galvanischen Zelle in Richtung eines elektrischen Verbrauchers herausführt. Vorzugsweise ist die wenigstens eine Ableiteinrichtung einer der Elektroden der galvanischen Zelle zugeordnet, mit dieser Elektrode insbesondere elektrisch leitend verbunden. Eine Ableiteinrichtung ermöglicht einen Stromfluss auch in entgegengesetzter Richtung. Vorzugsweise ist die wenigstens eine Ableiteinrichtung mit einer galvanischen Zelle auch wärmeleitend verbunden. Bei einem entsprechenden Temperaturgefälle leistet eine Ableiteinrichtung im Sinne der Erfindung auch einen Transport von Wärmeenergie aus einer galvanischen Zelle heraus. Bevorzugt weist die Ableiteinrichtung ein Metall auf. Besonders bevorzugt weist die Ableiteinrichtung Kupfer oder Aluminium auf.

Im Sinne der Erfindung ist unter der wenigstens einen Ableiteinrichtung auch eine Einheit aus mehreren Ableiteinrichtungen verschiedener galvanischer Zellen zu verstehen, welche beispielsweise mittels einer stromführenden Verbindungseinrichtung verbunden sind. Dabei sind die galvanischen Zellen in Reihen-oder Parallelschaltung verbunden, vorzugsweise mittels mehrerer vorhandener stromführender Verbindungseinrichtungen. Bei einer solchen Ausbildung der erfindungsgemäßen Vorrichtung ist die wenigstens eine Anschlusseinrichtung mit der wenigstens einen stromführenden Verbindungseinrichtung der Ableiteinrichtung elektrisch leitend und wärmeleitend verbunden. Vorzugsweise ist eine stromführende Verbindungseinrichtung so ausgestaltet, dass ihr Wärmewiderstand einen vorbestimmten Wert nicht überschreitet.

Im Sinne der Erfindung ist unter einer Anschlusseinrichtung eine Einrichtung zu verstehen, welche auch Elektronen von einer Ableiteinrichtung einem elektrischen Verbraucher zuführt. Eine Anschlusseinrichtung kann auch in entgegengesetzter Stromrichtung wirken. Vorzugsweise ist die Anschlusseinrichtung biegesteif ausgebildet. Vorzugsweise ist eine Anschlusseinrichtung beweglich als Stromkabel oder Stromband ausgebildet. Insbesondere wenn während des Betriebs der Anschlusseinrichtung Bewegungen oder Vibrationen zu erwarten sind, wird die wenigstens eine Anschlusseinrichtung vorzugsweise beweglich ausgebildet. Das Stromband kann als Folienband, Lamellenband oder Litzenband ausgebildet sein. Die Bauart der Anschlusseinrichtung ist von den baulichen Gegebenheiten am Einsatzort und den zu erwartenden Belastungen auch während des Betriebs der elektrochemischen Energiespeichervorrichtung abhängig. Die Anschlusseinrichtung ist mit der wenigstens einen Ableiteinrichtung vorzugsweise verschraubt oder vernietet. Es sind aber auch andere Arten der Verbindung möglich.

Im Sinne der Erfindung ist unter einer Wärmetauscheinrichtung eine Einrichtung zu verstehen, welche auch Wärmeenergie aus der Anschlusseinrichtung abführt. Dabei ist die Orientierung des Wärmestroms abhängig von dem Temperaturgefälle zwischen der Wärmetauscheinrichtung und der Anschlusseinrichtung bzw. den galvanischen Zellen der elektrochemischen Energiespeichervorrichtung. Vorzugsweise weist die Wärmetauscheinrichtung einen Werkstoff mit hoher Wärmeleitfähigkeit auf, insbesondere Kupfer oder Aluminium. Vorzugsweise weist ein Hauptkörper einer Wärmetauscheinrichtung eine mindeste Wärmekapazität auf. Vorzugsweise sind auf der Mantelfläche des Hauptkörpers der Wärmetauscheinrichtung Fortsätze zur Vergrößerung der Oberfläche angeordnet, vorzugsweise Rippen oder Stifte mit beliebiger Querschnittsfläche. Vorzugsweise verjüngt sich ein Fortsatz mit zunehmender Entfernung von dem Hauptkörper.
Vorzugsweise ist die wenigstens eine Wärmetauscheinrichtung mehrteilig ausgebildet. Vorzugsweise umschließt eine Wärmetauscheinrichtung eine Anschlusseinrichtung wenigstens teilweise.
Vorzugsweise wirkt die wenigstens eine Wärmetauscheinrichtung einer Temperaturerhöhung einer galvanischen Zelle entgegen.
Vorzugsweise wird ein Teil einer Heizleistung, welcher von einem elektrischen Strom in die galvanische Zelle hinein oder aus dieser heraus, von der wenigstens einen Wärmetauscheinrichtung abgeführt.
Vorzugsweise ist wenigstens zeitweise die elektrische Heizleistung eines elektrischen Stroms, welcher der wenigstens einen galvanischen Zelle zu- oder abgeführt wird, geringer als die Wärmeleistung, welche der wenigstens einen Wärmetauscheinrichtung entzogen wird.

Die Abfuhr einer Wärmeleistung aus einer galvanischen Zelle mit Hilfe einer erfindungsgemäßen Wärmetauscheinrichtung erfolgt mittelbar über wärmleitende Körper, insbesondere Ableiteinrichtung und Anschlusseinrichtung, welche zwischen der galvanischen Zelle und der erfindungsgemäßen Wärmetauscheinrichtung angeordnet sind. Jeder dieser Körper stellt einen Wärmewiderstand dar, welcher der treibenden Temperaturdifferenz aus der Temperatur der galvanischen Zelle und der Temperatur der Wärmetauscheinrichtung entgegen wirkt. Sofern einer galvanischen Zelle Wärmeleistung mittels der Wärmetauscheinrichtung entzogen wird, fällt die Temperatur entlang der Strecke zwischen der galvanischen Zelle und der Wärmetauscheinrichtung ab. So weichen die zulässigen Betriebstemperaturen einer galvanischen Zelle von denen der Wärmetauscheinrichtung ab. Vorzugsweise werden die zulässigen Betriebstemperaturen einer Wärmetauscheinrichtung mittels einer Wärmestrombilanz bestimmt. Vorzugsweise ist die maximal zulässige Betriebstemperatur einer Wärmetauscheinrichtung geringer, als die maximal zulässige Betriebstemperatur einer wärmeleitend verbundenen galvanischen Zelle.

Sofern die Temperatur der Wärmetauscheinrichtung geringer als die Temperatur der wenigstens einen galvanischen Zelle ist, wird ein Wärmestrom aus der galvanischen Zelle in Richtung der Wärmetauscheinrichtung erzeugt. So kann die Temperatur in der galvanischen Zelle gesenkt werden. Dadurch werden unumkehrbare chemische Reaktionen verringert. Die zur Energiewandlung und Energiespeicherung dienenden Bereiche der galvanischen Zelle werden weitgehend erhalten. So wird die fortschreitende Alterung der galvanischen Zellen einer Batterie verringert, die Ladekapazität über einen längeren Zeitraum erhalten und die zugrunde liegende Aufgabe gelöst.

Nachfolgend werden zu bevorzugende Weiterbildungen der Erfindung beschrieben.

Vorteilhaft weist die wenigstens eine Wärmetauscheinrichtung wenigstens einen ersten und einen zweiten Oberflächenbereich auf. Dabei sind die Oberflächenbereiche auf wenigstens einer Mantelfläche der wenigstens einen Wärmetauscheinrichtung angeordnet. Vorzugsweise ist die wenigstens eine Wärmetauscheinrichtung elektrisch gegenüber der wenigstens einen Anschlusseinrichtung isoliert. So kann insbesondere ein erster Oberflächenbereich eine elektrisch isolierende Beschichtung aufweisen. Vorzugsweise beträgt der Quotient aus dem Flächeninhalt eines ersten Oberflächenbereichs und dem Flächeninhalt eines zweiten Oberflächenbereichs weniger als 0,9. Vorzugsweise beträgt dieser Quotient weniger als 0,4. Besonders bevorzugt beträgt dieser Quotient weniger als 0,05. Die untere Grenze des Quotienten bestimmt sich aus wirtschaftlichen Erwägungen und ist auch vom verfügbaren Raum abhängig.

Vorteilhaft weist die wenigstens eine Wärmetauscheinrichtung wenigstens eine Messeinrichtung auf. Vorzugsweise erfasst die wenigstens eine Messeinrichtung die Temperatur einer Wärmetauscheinrichtung. Vorzugsweise erfasst die wenigstens eine Messeinrichtung die Temperatur in räumlicher Nähe zu einem zweiten Oberflächenbereich der wenigstens einen Wärmetauscheinrichtung. Besonders bevorzugt ermittelt die wenigstens eine Messeinrichtung die Temperatur eines zweiten Oberflächenbereichs der wenigstens einen Wärmetauscheinrichtung.

Vorzugsweise weist eine Messeinrichtung mehrere Messfühler auf, welche insbesondere verschiedenen Wärmetauscheinrichtungen zugeordnet sind. Vorzugsweise stellt die wenigstens eine Messeinrichtung wenigstens zeitweise einen Messwert zur Verfügung, welcher von einer eine erfindungsgemäße Vorrichtung ergänzende Steuerungseinrichtung verarbeitet werden kann.

Vorteilhaft wird die Wärmetauscheinrichtung wenigstens zeitweise von einem ersten Fluid angeströmt. Die Differenz aus der Temperatur des ersten Fluids und der Temperatur der wenigstens einen Wärmetauscheinrichtung, die sog. Temperaturdifferenz, bestimmt auch die Orientierung eines Wärmestroms. Vorzugsweise wird die Kühlleistung des ersten Fluids mittels Anpassung der Temperaturdifferenz und des Massenstroms eingestellt.
Vorzugsweise handelt es sich bei dem ersten Fluid um Umgebungsluft.

Vorteilhaft weist die wenigstens eine Wärmetauscheinrichtung wenigstens einen ersten Fluidkanal auf. Dieser erste Fluidkanal wird wenigstens zeitweise von einem ersten Fluid mit bestimmter Temperatur und Strömungsgeschwindigkeit durchströmt. Vorzugsweise handelt es sich bei dem ersten Fluid um Umgebungsluft oder ein anderes Kühlmittel. Vorzugsweise ist ein erster Fluidkanal in räumlicher Nähe zu einem ersten Oberflächenbereich innerhalb einer Wärmetauscheinrichtung angeordnet. Vorzugsweise weist die wenigstens eine Wärmetauscheinrichtung mehrere erste Fluidkanäle auf.

Vorteilhaft ist der elektrochemischen Energiespeichervorrichtung eine Fördereinrichtung zugeordnet. Diese Fördereinrichtung dient vorzugsweise der Beförderung des ersten Fluids insbesondere zur Kühlung der Wärmetauscheinrichtung. Dabei wird die Förderleistung der Fördereinrichtung auch an die zu übertragende Wärmeleistung angepasst. Vorzugsweise wird die Fördereinrichtung von einer Steuereinrichtung geschaltet, welche eine erfindungsgemäße Vorrichtung ergänzt. Vorzugsweise wird die Fördereinrichtung von der elektrochemischen Energiespeichervorrichtung mit Energie versorgt. Vorzugsweise handelt es sich bei der Fördereinrichtung um ein Gebläse oder eine Pumpe für ein Kühlmittel.

Vorteilhaft weist die Wärmetauscheinrichtung einen ersten Werkstoff auf, welcher vorgesehen ist, bei vorgegebenen Bedingungen einen Phasendurchgang zu durchlaufen. Vorzugsweise wird ein erster Werkstoff so gewählt, dass eine seiner Phasenübergangstemperaturen zwischen der maximal zulässigen Betriebstemperatur der wenigstens einen Wärmetauscheinrichtung und deren mindester Betriebstemperatur liegt. Besonders bevorzugt wird ein erster Werkstoff so gewählt, dass eine seiner Phasenübergangstemperaturen nur wenige Grad Kelvin unterhalb der maximal zulässigen Betriebstemperatur der wenigstens einen Wärmetauscheinrichtung liegt.
Dabei ist auch die maximale zulässige Betriebstemperatur der wenigstens einen Wärmetauscheinrichtung von der maximal zulässigen Betriebstemperatur einer wärmeleitend verbundenen galvanischen Zelle abhängig.
Vorzugsweise weist die Wärmetauscheinrichtung weiter einen weiteren ersten Werkstoff auf. Besonders bevorzugt wird ein weiterer erster Werkstoff so gewählt, dass eine seiner Phasenübergangstemperaturen nur wenige Grad Kelvin oberhalb der mindesten Betriebstemperatur der wenigstens einen Wärmetauscheinrichtung liegt.
Vorzugsweise ist ein erster Werkstoff in einem Hohlraum der wenigstens einen Wärmetauscheinrichtung angeordnet. Vorzugsweise ist ein erster Werkstoff in einem sogenannten "Wärmrohr" angeordnet. Dieses Wärmerohr wird in eine Wärmetauscheinrichtung so eingesetzt, dass sich das Wärme aufnehmende Ende des Wärmerohrs in der Nähe des ersten Oberflächenbereichs befindet. Das Wärme abgebende Ende des Wärmerohrs befindet sich in der Nähe des zweiten Oberflächenbereichs oder ragt aus der Wärmetauscheinrichtung heraus.

Vorteilhaft wird die wenigstens eine Wärmetauscheinrichtung elektrisch beheizt, insbesondere mit einer Widerstandsheizeinrichtung. Insbesondere nach einem Kaltstart kann die wenigstens eine Wärmetauscheinrichtung dienen, den mittelbar thermisch verbundenen galvanischen Zellen Wärmeenergie zuzuführen. Vorzugsweise wird eine Widerstandsheizeinrichtung von der elektrochemischen Energiespeichervorrichtung gespeist.
Vorteilhaft ist die wenigstens eine Wärmetauscheinrichtung elektrisch gekühlt. Dazu dient insbesondere wenigstens ein Peltier-Element, welches vorzugsweise von der elektrochemischen Energiespeichervorrichtung gespeist wird.

Vorteilhaft ist ein Kraftfahrzeug mit einer erfindungsgemäßen elektrochemischen Energiespeichervorrichtung ausgestattet. Das Kraftfahrzeug weist weiter eine Klimatisierungseinrichtung auf. Das Kühlmittel der Klimatisierungseinrichtung durchströmt bei Bedarf insbesondere den wenigstens einen ersten Fluidkanal der wenigstens einen Wärmetauscheinrichtung.
Vorzugsweise ist der Wärmetauscheinrichtung ein Ventil zur Begrenzung des Kühlmittelstroms durch den wenigstens einen ersten Fluidkanal zugeordnet.

Vorteilhaft wird die elektrochemische Energiespeichervorrichtung so betrieben, dass die wenigstens eine Wärmetauscheinrichtung wenigstens zeitweise von einem ersten Fluid angeströmt wird. Dabei ist die Temperatur und der Strom des ersten Fluids abhängig von der zu übertragenden Wärmeleistung gewählt. Sowohl die Temperatur als auch der Massenstrom des ersten Fluids können zeitlich schwanken.

Vorteilhaft wird die elektrochemische Energiespeichervorrichtung so betrieben, dass der wenigstens eine erste Fluidkanal der wenigstens einen Wärmetauscheinrichtung zeitweise von einem ersten Fluid durchströmt wird. Temperatur und Massenstrom des ersten Fluids sind an die zu übertragende Wärmeleistung angepasst.

Vorteilhaft wird die elektrochemische Energiespeichervorrichtung so betrieben, dass die ihr zugeordnete Fördereinrichtung bei vorbestimmten Bedingungen geschaltet wird. Vorzugsweise wird die Fördereinrichtung bei Über- oder Unterschreiten einer vorgegebenen Temperatur der wenigstens einen Wärmetauscheinrichtung eingeschaltet oder ausgeschaltet.
Vorzugsweise wird die Temperatur der wenigstens einen Wärmetauscheinrichtung von der wenigstens einen Messeinrichtung, insbesondere von einem Thermoelement erfasst. Vorzugsweise verarbeitet eine die Vorrichtung ergänzende Steuereinrichtung den von der wenigstens einen Messeinrichtung bereitgestellten Wert und schaltet die Fördereinrichtung.

Vorteilhaft wird die wenigstens eine Wärmetauscheinrichtung der elektrochemischen Energiespeichervorrichtung bei Bedarf elektrisch beheizt oder gekühlt. Dazu wird vorzugsweise das Signal der wenigstens einen Messeinrichtung von einer die Vorrichtung ergänzende Steuereinrichtung verarbeitet.

Vorteilhaft wird die elektrochemische Energiespeichervorrichtung mit einem Kraftfahrzeug mit Klimatisierungseinrichtung derart betrieben, dass ein Kühlmittel der Klimatisierungseinrichtung zur Temperierung der wenigstens einen Wärmetauscheinrichtung herangezogen wird. Abhängig von der zu übertragenden Wärmeleistung wird der Kühlmittelstrom eingestellt. Vorzugsweise wird auch die Temperaturdifferenz zwischen Kühlmittel und der wenigstens einen Wärmetauscheinrichtung berücksichtigt.

Vorteilhaft wird die elektrochemische Energiespeichervorrichtung so betrieben, dass die Wärmetauscheinrichtung der wenigstens einen Anschlusseinrichtung Wärmeenergie zuführt. Dazu ist die Temperatur der Wärmetauscheinrichtung höher als die Temperatur der Anschlusseinrichtung. Diese Wärmeenergie wird mittelbar der wenigstens einen galvanischen Zelle zugeführt und deren Temperatur erhöht. Das ist insbesondere bei einem Kaltstart auch zur Erhöhung der Energieabgabe der elektrochemischen Energiespeichervorrichtung von Vorteil. Vorzugsweise weist wenigstens eine Elektrode der elektrochemischen Energiespeichervorrichtung, besonders bevorzugt wenigstens eine Kathode, eine Verbindung mit der Formel LiMPO₄ auf, wobei M wenigstens ein Übergangsmetallkation der ersten Reihe des Periodensystems der Elemente ist. Das Übergangsmetallkation ist vorzugsweise aus der Gruppe bestehend aus Mn, Fe, Ni und Ti oder einer Kombination dieser Elemente gewählt. Die Verbindung weist vorzugsweise eine Olivinstruktur auf, vorzugsweise übergeordnetes Olivin.

In einer weiteren Ausführungsform weist vorzugsweise wenigstens eine Elektrode der elektrochemischen Energiespeichervorrichtung, besonders bevorzugt wenigstens eine Kathode, ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, auf.

Vorzugsweise sind die negative und die positive Elektrode der elektrochemischen Energiespeichervorrichtung durch einen oder mehrere Separatoren voneinander getrennt. Solche Separatormaterialien können beispielsweise auch aus porösen anorganischen Materialien bestehen die so beschaffen sind, dass ein Stofftransport durch den Separator senkrecht zur Separatorschicht erfolgen kann, wohingegen ein Stofftransport parallel zur Separatorschicht behindert oder sogar unterdrückt wird.

Besonders bevorzugt sind dabei Separatormaterialien, die aus einem porösen anorganischen Material bestehen, das mit Partikeln durchsetzt ist oder solche Partikel wenigstens an seiner Oberfläche aufweist, die beim Erreichen oder Überschreiten einer Temperaturschwelle schmelzen und die Poren der Separatorschicht wenigstens lokal verkleinern oder verschließen. Solche Partikel können vorzugsweise aus einem Material bestehen, dass aus einer Gruppe von Materialien ausgewählt ist, die Polymere oder Mischungen von Polymeren, Wachse oder Mischungen dieser Materialien umfasst.

Besonders bevorzugt ist eine Ausführungsform der Erfindung, bei der die Separatorschicht derart ausgestaltet ist, dass sich ihre Poren aufgrund einer Kapillarwirkung mit dem beweglichen Bestandteil füllen, der als Edukt an der chemischen Reaktion beteiligt ist, so dass sich außerhalb der Poren der Separatorschicht nur ein relativ geringer Teil der in der elektrochemischen Energiespeichervorrichtung vorhandenen Gesamtmenge des beweglichen Bestandteils befindet. In diesem Zusammenhang ist der in der elektrochemischen Energiespeichervorrichtung befindliche Elektrolyt oder einer seiner chemischen Bestandteile oder eine Mischung solcher Bestandteile ein besonders bevorzugtes Edukt, der gemäß einem besonders bevorzugten Ausführungsbeispiel der Erfindung möglichst die gesamte poröse Separatorschicht benetzt oder durchtränkt, der jedoch außerhalb der Separatorschicht nicht oder nur in vernachlässigbarer oder verhältnismäßig geringer Menge anzutreffen ist. Eine solche Anordnung kann bei der Herstellung der elektrochemischen Energiespeichervorrichtung dadurch erhalten werden, dass der poröse Separator mit dem in der elektrochemischen Energiespeichervorrichtung befindlichen Elektrolyten oder einem anderen Edukt einer geeignet gewählten chemischen Reaktion getränkt wird, so dass dieses Edukt sich anschließend weitgehend nur in dem Separator befindet.

Kommt es nun aufgrund einer chemischen Reaktion zu einer möglicherweise zunächst nur lokalen Drucksteigerung durch Bildung einer Gasblase oder durch eine lokale Erwärmung, dann kann dieses Edukt nicht aus anderen Bereichen in das Reaktionsgebiet nachfließen. Soweit oder solange es noch nachfließen kann, wird die Verfügbarkeit dieses Eduktes an anderen Stellen entsprechend vermindert. Die Reaktion kommt schließlich zum Stillstand oder bleibt wenigstens auf ein vorzugsweise kleines Gebiet begrenzt.

Erfindungsgemäß wird vorzugsweise ein Separator verwendet, welcher nicht oder nur schlecht elektronenleitend ist, und welcher aus einem zumindest teilweise stoffdurchlässigen Träger besteht. Der Träger ist vorzugsweise auf mindestens einer Seite mit einem anorganischen Material beschichtet. Als wenigstens teilweise stoffdurchlässiger Träger wird vorzugsweise ein organisches Material verwendet, welches vorzugsweise als nicht verwebtes Vlies ausgestaltet ist. Das organische Material, welches vorzugsweise ein Polymer und besonders bevorzugt ein Polyethylenterephthalat (PET) umfasst, ist mit einem anorganischen, vorzugsweise ionenleitenden Material beschichtet, welches weiter vorzugsweise in einem Temperaturbereich von - 40° C bis 200° C ionenleitend ist. Das anorganische Material umfasst bevorzugt wenigstens eine Verbindung aus der Gruppe der Oxide, Phosphate, Sulfate, Titanate, Silikate, Aluminosilikate mit wenigstens einem der Elemente Zr, Al, Li, besonders bevorzugt Zirkonoxid. Bevorzugt weist das anorganische, ionenleitende Material Partikel mit einem größten Durchmesser unter 100 nm auf.

Ein solcher Separator wird beispielsweise unter dem Handelsnamen "Separion" von der Evonik AG in Deutschland vertrieben.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: eine schematische Darstellung einer erfindungsgemäßen elektrochemi- schen Energiespeichervorrichtung mit mehreren galvanischen Zellen,
- Fig. 2: eine erfindungsgemäße mehrteilige Wärmetauscheinrichtung mit Fluid- kanal und Thermoelement im Schnitt,
- Fig. 3: eine erfindungsgemäße Wärmetauscheinrichtung mit einem ersten Werkstoff, welcher in einem Hohlraum angeordnet ist, und Wider- standsheizung,
- Fig. 4: eine erfindungsgemäße Wärmetauscheinrichtung, ausgestaltet für ein Flachkabel,
- Fig. 5: eine erfindungsgemäße elektrochemische Energiespeichervorrichtung mit einer Wärmetauscheinrichtung, welche von der Klimaanlage eines Kraftfahrzeugs gekühlt wird.

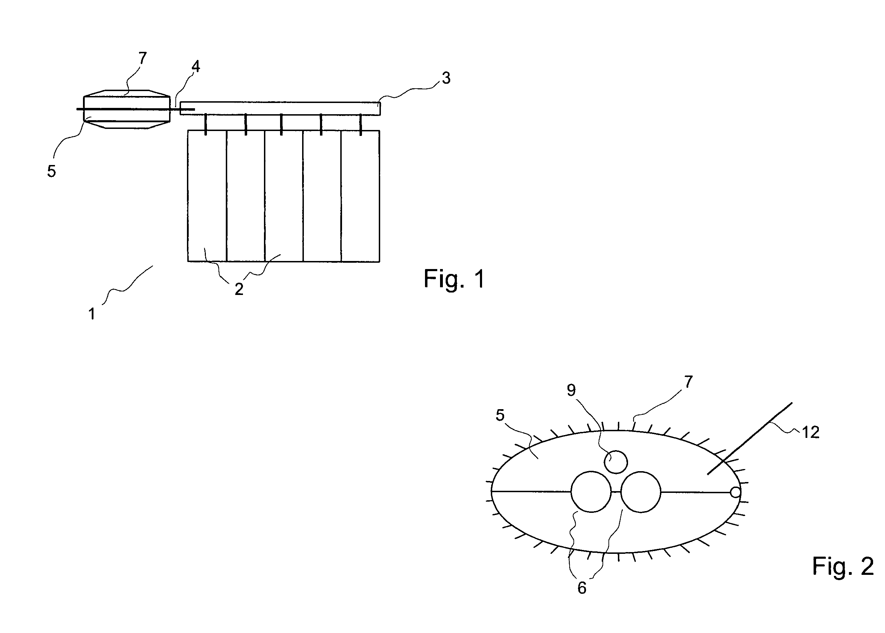

Fig.1 zeigt eine erfindungsgemäße elektrochemische Energiespeichervorrichtung 1 mit mehreren galvanischen Zellen 2. Die galvanischen Zellen 2 sind mit einer stromführenden Verbindungseinrichtung einer gemeinsamen Ableiteinrichtung 3 elektrisch leitend und wärmeleitend verbunden. So sind die galvanischen Zellen 2 parallel geschaltet. Auch können die galvanischen Zellen 2 in Reihe geschaltet sein. Auch Kombinationen aus Reihen- und Parallelschaltungen sind möglich. Mit der stromführenden Verbindungseinrichtung des gemeinsamen Ableiters 3 ist ein Anschlusskabel 4 verbunden. Nicht dargestellt sind Ableiter und Kabel zur elektrischen Kontaktierung der Elektroden entgegengesetzter Polarität der galvanischen Zellen. Das Anschlusskabel 4 führt zu einem elektrischen Verbraucher. In der Nähe des Ableiters 3 ist dem Anschlusskabel 4 eine Wärmetauscheinrichtung 5 zugeordnet. Die Wärmetauscheinrichtung 5 berührt das Anschlusskabel 4 wärmeleitend. Die Wärmetauscheinrichtung 5 weist Rippen zur Vergrößerung des zweiten Oberflächenbereichs 7 auf, wobei nur zwei Rippen dargestellt sind. Die Wärmetauscheinrichtung 5 umschließt das Anschlusskabel 4 und ist in unmittelbarer Nähe der Verbindung von Ableiter 3 und Anschlusskabel 4 angeordnet. Auch mit der Anordnung der Wärmetauscheinrichtung 5 kann Einfluss auf den thermischen Widerstand bezüglich der abzuführenden Wärmeleistung genommen werden. So kann eine Wärmetauscheinrichtung in größerer Entfernung vom Ableiter bzw. von den galvanischen Zellen von geringerem Nutzen für die Übertragung einer Wärmeleistung aus den galvanischen Zellen einer erfindungsgemäßen Energiespeichervorrichtung sein.

Fig. 2 zeigt eine Wärmetauscheinrichtung 5 im Schnitt. Die Wärmetauscheinrichtung 5 ist zweiteilig ausgebildet. Die zwei Hälften der Wärmetauscheinrichtung 5 sind mit einem Scharnier verbunden, welches auf der rechten Seite angedeutet ist. Die Wärmetauscheinrichtung 5 weist zwei erste Oberflächenbereiche 6 auf, welche zur wärmeleitenden Berührung der nicht dargestellten Anschlusskabel vorgesehen sind. Der zweite Oberflächenbereich 7 der Wärmetauscheinrichtung 5 weist Kühlrippen auf. Weiter weist eine Hälfte der zweiteiligen Wärmetauscheinrichtung 5 einen ersten Fluidkanal 9 auf. Auch ist die Wärmetauscheinrichtung 5 mit einem Thermoelement 12 ausgerüstet. In die zweiteilige Wärmetauscheinrichtung 5 können nach dem Aufklappen zwei Anschlusskabel 4 eingelegt werden. Die Aussparungen für die Anschlusskabel 4 sind so ausgebildet, dass sich nach dem Schließen der Hälften Presspassungen einstellen. So ist ein guter thermischer Kontakt zwischen den Anschlusskabeln 4 und den ersten Oberflächenbereichen 6 sichergestellt. Nicht dargestellt sind eine Schließeinrichtung, welche ein unbeabsichtigtes Öffnen der Hälften verhindert.

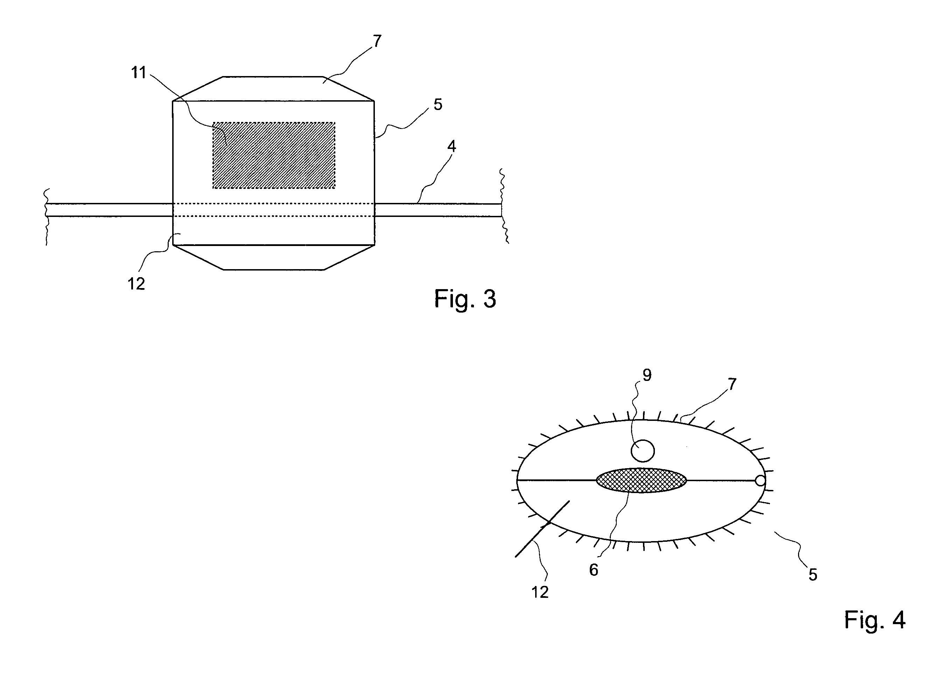

Fig. 3 zeigt eine erfindungsgemäße Wärmetauscheinrichtung 5, welche ein Anschlusskabel 4 bereichsweise umschließt. Der zweite Oberflächenbereich 7 der Wärmetauscheinrichtung 5 weist Rippen auf, von denen zwei in der Fig. dargestellt sind. Weiter weist die Wärmetauscheinrichtung 5 einen Hohlraum mit einem ersten Werkstoff 11 auf. Dieser erste Werkstoff ist so gewählt, dass seine Schmelztemperatur zwei Kelvin unterhalb der maximal zulässigen Betriebstemperatur für die Wärmetauscheinrichtung 5 liegt. Die maximal zulässige Betriebstemperatur der Wärmetauscheinrichtung 5 ist so gewählt, dass die Temperaturdifferenz zwischen einer mittelbar verbundenen galvanischen Zelle 2 und der Wärmetauscheinrichtung 5 den Entzug eines Teils der Heizleistung ermöglicht, welche von einem elektrischen Strom in die galvanische Zelle 2 oder aus einer galvanischen Zelle 2 heraus verursacht wird. So ist die maximal zulässige Betriebstemperatur der Wärmetauscheinrichtung 5 auch abhängig von dem summierten Wärmewiderstand der wärmeleitenden Körper zwischen einer galvanischen Zelle 2 und einer thermisch verbundenen Wärmetauscheinrichtung 5. Weiter weist die Wärmetauscheinrichtung 5 ein Thermoelement 12 auf, welches in der Nähe des zweiten Oberflächenbereichs 7 angeordnet ist.

Fig. 4 zeigt eine weitere erfindungsgemäße Wärmetauscheinrichtung 5. Diese ist ausgestaltet, ein Stromband 4 zu umschließen. Die Geometrie des ersten Oberflächenbereichs 6 ist an die Gestalt des Strombands 4 angepasst. Das Stromband 4 ist mittels einer Presspassung von der Wärmetauscheinrichtung 5 aufgenommen.

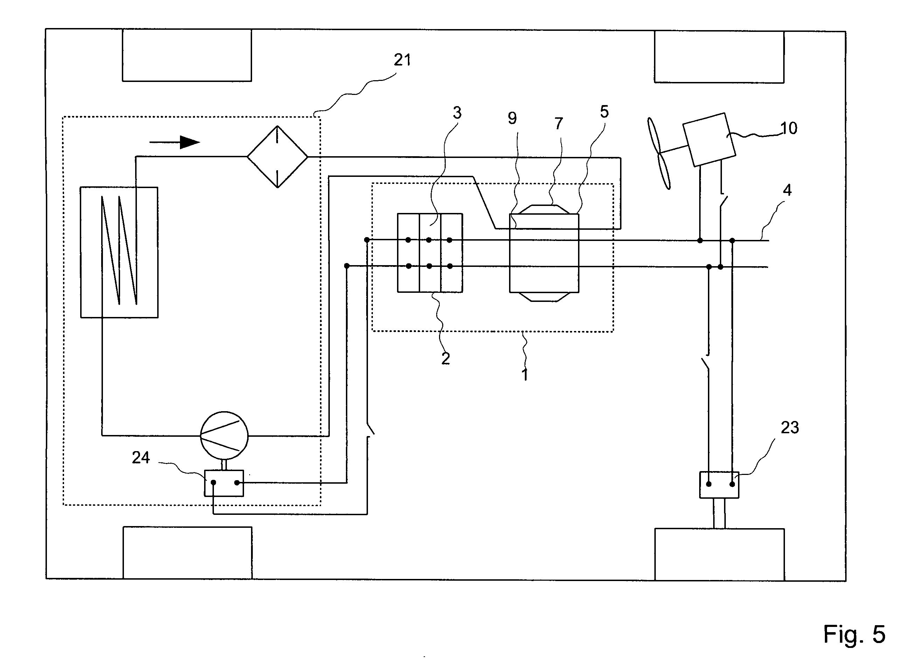

Fig. 5 zeigt ein Kraftfahrzeug mit einer Klimatisierungseinrichtung 21 und einer erfindungsgemäßen elektrochemischen Energiespeichervorrichtung. Die Klimatisierungseinrichtung 21 ist nur in dem Umfang dargestellt, der zur Erläuterung der Funktion der elektrochemischen Energiespeichervorrichtung 1 erforderlich ist. Die elektrochemische Energiespeichervorrichtung 1 weist eine Anzahl galvanischer Zellen 2 auf. Diese sind mit einer stromführenden Verbindungseinrichtung einer gemeinsamen Ableiteinrichtung 3 parallel geschaltet. Mit der Ableiteinrichtung 3 ist eine Anschlusseinrichtung 4 verbunden. Die Anschlusseinrichtung 4 verläuft durch eine Wärmetauscheinrichtung 5, deren zweiter Oberflächenbereich 7 Rippen aufweist. Die Wärmetauscheinrichtung 5 nimmt gleichzeitig zwei Anschlusskabel 4 auf. Von dem Anschlusskabel 4 sind verschiedene Zuleitungen zu verschiedenen Verbrauchern abgezweigt. Insbesondere ist ein Elektromotor 23 zum Antrieb eines Rads des Kraftfahrzeugs, eine erste Fördereinrichtung 10 und der Antrieb 24 für die Kühlmittelpumpe der Klimatisierungseinrichtung 21 dargestellt.

Die Energiespeichervorrichtung 1 wird so betrieben, dass noch vor Erreichen einer maximal zulässigen Betriebstemperatur einer galvanischen Zelle 2 bzw. der Wärmetauscheinrichtung 5 die Fördereinrichtung 10 sowie die Kühlmittelpumpe 24 eingeschaltet werden. Die Fördereinrichtung 10 bewirkt einen Luftstrom, welcher den zweiten Oberflächenbereich 7 anströmt. Die Kühlmittelpumpe 24 fördert das Kühlmittel 22 der Klimatisierungseinrichtung 21. Das Kühlmittel 22 durchströmt dabei einen ersten Fluidkanal 9 und trägt so ebenfalls zur Kühlung der Wärmetauscheinrichtung 5 bei. So kann eine Temperaturdifferenz zwischen der Wärmetauscheinrichtung 5 und der damit mittelbar verbundenen galvanischen Zelle 2 erzeugt und der galvanischen Zelle 2 bzw. der Wärmetauscheinrichtung 5 eine Wärmeleistung entzogen werden.

## Patentansprüche

1. Elektrochemische Energiespeichervorrichtung (1), welche aufweist:
wenigstens eine galvanische Zelle (2),
wenigstens eine Ableiteinrichtung (3), welche der wenigstens einen galvanischen Zelle (2) zugeordnet ist,
wenigstens eine Anschlusseinrichtung (4), welche der wenigstens einen Ableiteinrichtung (3) zugeordnet ist,
**dadurch gekennzeichnet,**
**dass** der wenigstens einen Anschlusseinrichtung (4) wenigstens eine Wärmetauscheinrichtung (5) zugeordnet ist,
wobei die wenigstens eine Wärmetauscheinrichtung (5) ausgestaltet ist, mit der wenigstens einen Anschlusseinrichtung (4) Wärmeenergie auszutauschen.

2. Elektrochemische Energiespeichervorrichtung (1) gemäß Anspruch 1,
**dadurch gekennzeichnet, dass** die wenigstens eine Wärmetauscheinrichtung (5) einen ersten Oberflächenbereich (6) und einen zweiten Oberflächenbereich (7) aufweist,
wobei der erste Oberflächenbereich (6) wenigstens teilweise zur insbesondere wärmeleitenden Berührung der wenigstens einen Anschlusseinrichtung (4) ausgestaltet ist,
und wobei der Flächeninhalt des ersten Oberflächenbereichs (6) nicht größer ist, als der Flächeninhalt des zweiten Oberflächenbereichs (7).

3. Elektrochemische Energiespeichervorrichtung (1) gemäß mindestens einem der vorhergehenden Ansprüche, **dadurch gekennzeichnet, dass** der wenigstens einen Wärmetauscheinrichtung (5) wenigstens eine Messeinrichtung (12), insbesondere wenigstens eine Temperaturmesseinrichtung zugeordnet ist.

4. Elektrochemische Energiespeichervorrichtung (1) gemäß mindestens einem der vorhergehenden Ansprüche, **dadurch gekennzeichnet, dass** die wenigstens eine Wärmetauscheinrichtung (5), insbesondere der zweite Oberflächenbereich (7) der wenigstens einen Wärmetauscheinrichtung (5) vorgesehen ist, von einem ersten Fluid (8) angeströmt zu werden.

5. Elektrochemische Energiespeichervorrichtung (1) gemäß mindestens einem der vorhergehenden Ansprüche, **dadurch gekennzeichnet, dass** die wenigstens eine Wärmetauscheinrichtung (5) wenigstens einen ersten Fluidkanal (9) aufweist, welcher vorgesehen ist, von einem ersten Fluid (8) durchströmt zu werden.

6. Elektrochemische Energiespeichervorrichtung (1) gemäß mindestens einem der vorhergehenden Ansprüche, **dadurch gekennzeichnet, dass** der elektrochemischen Energiespeichervorrichtung (1) eine Fördereinrichtung (10), insbesondere zur Förderung ein ersten Fluids (8) zugeordnet ist.

7. Elektrochemische Energiespeichervorrichtung (1) gemäß mindestens einem der vorhergehenden Ansprüche, **dadurch gekennzeichnet, dass** die wenigstens eine Wärmetauscheinrichtung (5) wenigstens einen ersten Werkstoff (11) aufweist, welcher vorgesehen ist, bei vorgegebenen Bedingungen einen Phasenübergang zu durchlaufen,
wobei die Temperatur eines Phasenübergangs des ersten Werkstoffs (11) an die Betriebstemperatur der wenigstens einen Wärmetauscheinrichtung 5 angepasst ist.

8. Elektrochemische Energiespeichervorrichtung (1) gemäß mindestens einem der vorhergehenden Ansprüche, **dadurch gekennzeichnet, dass** die Wärmetauscheinrichtung (5) ausgestaltet ist, elektrisch beheizt oder gekühlt zu werden.

9. Elektrochemische Energiespeichervorrichtung (1) nach einem der vorhergehenden Ansprüche, **dadurch gekennzeichnet, dass** sie wenigstens eine Elektrode umfasst, vorzugsweise wenigstens eine Kathode, welche eine Verbindung mit der Formel LiMPO₄ aufweist, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist; und/oder dass sie wenigstens eine Elektrode umfasst, vorzugsweise wenigstens eine Kathode, welche ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, aufweist.

10. Elektrochemische Energiespeichervorrichtung (1) nach einem der vorhergehenden Ansprüche, **dadurch gekennzeichnet, dass** sie wenigstens einen Separator umfasst, welcher nicht oder nur schlecht elektronenleitend ist, und welcher aus einem zumindest teilweise stoffdurchlässigen Träger besteht, wobei der Träger vorzugsweise auf mindestens einer Seite mit einem anorganischen Material beschichtet ist,
wobei als wenigstens teilweise stoffdurchlässiger Träger vorzugsweise ein organisches Material verwendet wird, welches vorzugsweise als nicht verwebtes Vlies ausgestaltet ist, wobei das organische Material vorzugsweise ein Polymer und besonders bevorzugt ein Polyethylenterephthalat (PET) umfasst,
wobei das organische Material mit einem anorganischen, vorzugsweise ionenleitenden Material beschichtet ist, welches weiter vorzugsweise in einem Temperaturbereich von - 40° C bis 200 °C ionenleitend ist, wobei das anorganische Material bevorzugt wenigstens eine Verbindung aus der Gruppe der Oxide, Phosphate, Sulfate, Titanate, Silikate, Aluminosilikate wenigstens eines der Elemente Zr, Al, Li umfasst, besonders bevorzugt Zirkonoxid, und wobei das anorganische, ionenleitende Material bevorzugt Partikel mit einem größten Durchmesser unter 100 nm aufweist.

11. Kraftfahrzeug mit einer elektrochemischen Energiespeichervorrichtung (1) gemäß mindestens einem der vorhergehenden Ansprüche und mit einer Klimatisierungseinrichtung (21), **dadurch gekennzeichnet, dass** die wenigstens eine Wärmetauscheinrichtung, insbesondere der wenigstens eine erste Fluidkanal (9) der wenigstens einen Wärmetauscheinrichtung (5) vorgesehen ist, von einem Kühlmittel (22) der Klimatisierungseinrichtung (21) durchströmt zu werden,
wobei die Klimatisierungseinrichtung (21) mit der wenigstens einen Wärmetauscheinrichtung (5), insbesondere mit dem wenigstens einen ersten Fluidkanal (9) der wenigstens einen Wärmetauscheinrichtung (5) vorzugsweise über wenigstens eine bewegliche Rohrleitung verbunden ist.

12. Verfahren zum Betrieb einer Vorrichtung gemäß Anspruch 4, **dadurch gekennzeichnet, dass** die wenigstens eine Wärmetauscheinrichtung (5), insbesondere der zweite Oberflächenbereich der wenigstens einen Wärmetauscheinrichtung (5) bei vorgegebenen Bedingungen von einem ersten Fluid (8) angeströmt wird.

13. Verfahren zum Betrieb einer Vorrichtung gemäß Anspruch 5, **dadurch gekennzeichnet, dass** der wenigstens eine erste Fluidkanal (9) der wenigstens einen Wärmetauscheinrichtung (5) von einem ersten Fluid (8) durchströmt wird.

14. Verfahren zum Betrieb einer Vorrichtung gemäß Anspruch 6, **dadurch gekennzeichnet, dass** die Fördereinrichtung (10) bei vorbestimmten Bedingungen geschaltet wird.

15. Verfahren zum Betrieb einer Vorrichtung gemäß Anspruch 8, **dadurch gekennzeichnet, dass** die wenigstens eine Wärmetauscheinrichtung (5) bei vorbestimmten Bedingungen elektrisch beheizt oder gekühlt wird; oder zum Betrieb einer Vorrichtung gemäß Anspruch 12, **dadurch gekennzeichnet, dass** der wenigstens eine erste Fluidkanal (9) der wenigstens einen Wärmetauscheinrichtung (5) von einem Kühlmittel (22) der Klimatisierungseinrichtung (21) durchströmt wird, wobei der Kühlmittelstrom abhängig von der zu übertragenden Wärmeleistung eingestellt wird.

## Geänderte Patentansprüche

### Geänderte Patentansprüche gemäss Regel 137(2) EPÜ.

**1.** Elektrochemische Energiespeichervorrichtung (1), welche aufweist:
wenigstens eine galvanische Zelle (2),
wenigstens eine Ableiteinrichtung (3), welche der wenigstens einen galvanischen Zelle (2) zugeordnet ist,
wenigstens eine Anschlusseinrichtung (4), welche der wenigstens einen Ableiteinrichtung (3) zugeordnet ist,
**dadurch gekennzeichnet,**
**dass** der wenigstens einen Anschlusseinrichtung (4) wenigstens eine Wärmetauscheinrichtung (5) zugeordnet ist,
wobei die wenigstens eine Wärmetauscheinrichtung (5) ausgestaltet ist,
mit der wenigstens einen Anschlusseinrichtung (4) Wärmeenergie auszutauschen, **dadurch gekennzeichnet, dass** die Wärmetauscheinrichtung wenigstens eine Anschlusseinrichtung wenigstens teilweise umschließt.

**2.** Elektrochemische Energiespeichervorrichtung (1) gemäß Anspruch 1, **dadurch gekennzeichnet, dass** die wenigstens eine Wärmetauscheinrichtung (5) elektrisch gegenüber der wenigstens einen Anschlusseinrichtung isoliert ist.

**3.** Elektrochemische Energiespeichervorrichtung (1) gemäß mindestens einem der vorhergehenden Ansprüche, **dadurch gekennzeichnet, dass** der wenigstens einen Wärmetauscheinrichtung (5) wenigstens eine Messeinrichtung (12), insbesondere wenigstens eine Temperaturmesseinrichtung zugeordnet ist.

**4.** Elektrochemische Energiespeichervorrichtung (1) gemäß mindestens einem der vorhergehenden Ansprüche, **dadurch gekennzeichnet, dass** die wenigstens eine Wärmetauscheinrichtung (5) einen ersten Oberflächenbereich (6) und einen zweiten Oberflächenbereich (7) aufweist, wobei der erste Oberflächenbereich (6) wenigstens teilweise zur insbesondere wärmeleitenden Berührung der wenigstens einen Anschlusseinrichtung (4) ausgestaltet ist, und wobei der Flächeninhalt des ersten Oberflächenbereichs (6) nicht größer ist, als der Flächeninhalt des zweiten Oberflächenbereichs (7), und wobei der zweite Oberflächenbereich (7) der wenigstens einen Wärmetauscheinrichtung (5) vorgesehen ist, von einem ersten Fluid (8) angeströmt zu werden.

**5.** Elektrochemische Energiespeichervorrichtung (1) gemäß mindestens einem der vorhergehenden Ansprüche, **dadurch gekennzeichnet, dass** die wenigstens eine Wärmetauscheinrichtung (5) wenigstens einen ersten Fluidkanal (9) aufweist, welcher vorgesehen ist, von einem ersten Fluid (8) durchströmt zu werden.

**6.** Elektrochemische Energiespeichervorrichtung (1) gemäß mindestens einem der vorhergehenden Ansprüche, **dadurch gekennzeichnet, dass** der elektrochemischen Energiespeichervorrichtung (1) eine Fördereinrichtung (10), insbesondere zur Förderung ein ersten Fluids (8) zugeordnet ist.

**7.** Elektrochemische Energiespeichervorrichtung (1) gemäß mindestens einem der vorhergehenden Ansprüche, **dadurch gekennzeichnet, dass** die wenigstens eine Wärmetauscheinrichtung (5) wenigstens einen ersten Werkstoff (11) aufweist, welcher vorgesehen ist, bei vorgegebenen Bedingungen einen Phasenübergang zu durchlaufen,
wobei die Temperatur eines Phasenübergangs des ersten Werkstoffs (11) an die Betriebstemperatur der wenigstens einen Wärmetauscheinrichtung 5 angepasst ist.

**8.** Elektrochemische Energiespeichervorrichtung (1) gemäß mindestens einem der vorhergehenden Ansprüche, **dadurch gekennzeichnet, dass** die Wärmetauscheinrichtung (5) ausgestaltet ist, elektrisch beheizt oder gekühlt zu werden.

**9.** Elektrochemische Energiespeichervorrichtung (1) nach einem der vorhergehenden Ansprüche, **dadurch gekennzeichnet, dass** sie wenigstens eine Elektrode umfasst, vorzugsweise wenigstens eine Kathode, welche eine Verbindung mit der Formel LiMPO₄ aufweist, wobei M wenigstens ein Übergangsmetallkation der ersten Reihe des Periodensystems der Elemente ist, wobei dieses Übergangsmetallkation vorzugsweise aus der Gruppe bestehend aus Mn, Fe, Ni und Ti oder einer Kombination dieser Elemente gewählt ist, und wobei die Verbindung vorzugsweise eine Olivinstruktur aufweist, vorzugsweise übergeordnetes Olivin, wobei Fe besonders bevorzugt ist; und/oder dass sie wenigstens eine Elektrode umfasst, vorzugsweise wenigstens eine Kathode, welche ein Lithiummanganat, vorzugsweise LiMn₂O₄ vom Spinell-Typ, ein Lithiumkobaltat, vorzugsweise LiCoO₂, oder ein Lithiumnickelat, vorzugsweise LiNiO₂, oder ein Gemisch aus zwei oder drei dieser Oxide, oder ein Lithiummischoxid, welches Mangan, Kobalt und Nickel enthält, aufweist.

**10.** Elektrochemische Energiespeichervorrichtung (1) nach einem der vorhergehenden Ansprüche, **dadurch gekennzeichnet, dass** sie wenigstens einen Separator umfasst, welcher nicht oder nur schlecht elektronenleitend ist, und welcher aus einem zumindest teilweise stoffdurchlässigen Träger besteht, wobei der Träger vorzugsweise auf mindestens einer Seite mit einem anorganischen Material beschichtet ist,
wobei als wenigstens teilweise stoffdurchlässiger Träger vorzugsweise ein organisches Material verwendet wird, welches vorzugsweise als nicht verwebtes Vlies ausgestaltet ist, wobei das organische Material vorzugsweise ein Polymer und besonders bevorzugt ein Polyethylenterephthalat (PET) umfasst,
wobei das organische Material mit einem anorganischen, vorzugsweise ionen leitenden Material beschichtet ist, welches weiter vorzugsweise in einem Temperaturbereich von - 40° C bis 200 °C ionenleitend ist, wobei das anorganische Material bevorzugt wenigstens eine Verbindung aus der Gruppe der Oxide, Phosphate, Sulfate, Titanate, Silikate, Aluminosilikate wenigstens eines der Elemente Zr, Al, Li umfasst, besonders bevorzugt Zirkonoxid, und wobei das anorganische, ionenleitende Material bevorzugt Partikel mit einem größten Durchmesser unter 100 nm aufweist.

**11.** Kraftfahrzeug mit einer elektrochemischen Energiespeichervorrichtung (1) gemäß mindestens einem der vorhergehenden Ansprüche und mit einer Klimatisierungseinrichtung (21), **dadurch gekennzeichnet, dass** die wenigstens eine Wärmetauscheinrichtung, insbesondere der wenigstens eine erste Fluidkanal (9) der wenigstens einen Wärmetauscheinrichtung (5) vorgesehen ist, von einem Kühlmittel (22) der Klimatisierungseinrichtung (21) durchströmt zu werden,
wobei die Klimatisierungseinrichtung (21) mit der wenigstens einen Wärmetauscheinrichtung (5), insbesondere mit dem wenigstens einen ersten Fluidkanal (9) der wenigstens einen Wärmetauscheinrichtung (5) vorzugsweise über wenigstens eine bewegliche Rohrleitung verbunden ist.

**12.** Verfahren zum Betrieb einer Vorrichtung gemäß Anspruch 4, **dadurch gekennzeichnet, dass** die wenigstens eine Wärmetauscheinrichtung (5), insbesondere der zweite Oberflächenbereich der wenigstens einen Wärmetauscheinrichtung (5) bei vorgegebenen Bedingungen von einem ersten Fluid (8) angeströmt wird.

**13.** Verfahren zum Betrieb einer Vorrichtung gemäß Anspruch 5, **dadurch gekennzeichnet, dass** der wenigstens eine erste Fluidkanal (9) der wenigstens einen Wärmetauscheinrichtung (5) von einem ersten Fluid (8) durchströmt wird.

**14.** Verfahren zum Betrieb einer Vorrichtung gemäß Anspruch 6, **dadurch gekennzeichnet, dass** die Fördereinrichtung (10) bei vorbestimmten Bedingungen geschaltet wird.

**15.** Verfahren zum Betrieb einer Vorrichtung gemäß Anspruch 8, **dadurch gekennzeichnet, dass** die wenigstens eine Wärmetauscheinrichtung (5) bei vorbestimmten Bedingungen elektrisch beheizt oder gekühlt wird; oder zum Betrieb einer Vorrichtung gemäß Anspruch 12, **dadurch gekennzeichnet, dass** der wenigstens eine erste Fluidkanal (9) der wenigstens einen Wärmetauscheinrichtung (5) von einem Kühlmittel (22) der Klimatisierungseinrichtung (21) durchströmt wird, wobei der Kühlmittelstrom abhängig von der zu übertragenden Wärmeleistung eingestellt wird.
